# EUROPEAN PATENT APPLICATION

(11) **EP 4 186 743 A1**
(43) Date of publication of application: **31.05.2023**
(21) Application number: 22209803.0
(22) Date of filing: 28.11.2022
(51) Int. Cl.: B60L 53/16, H01R 13/00

(54) **INTERFACE FOR VEHICLES CHARGING SOCKETS WITH INTEGRATED PROXIMITY SENSOR**

(30) Priority: 30.11.2021 IT 202100030272
(71) Applicant: Bitron S.p.A., 10122 Torino (IT)
(72) Inventor: FRIGNANI, Alberto, 43125 Parma (IT)
(74) Representative: Boario, Enrico

(57) **Abstract**

Interface (3) for charging sockets (2) of vehicles (1), adapted to return to the user of a charging socket (2) information about the charging state of at least one battery comprised in the vehicle (1). The interface (3) is adapted to be housed in the same compartment (11) which, being positioned outside a passenger compartment of the vehicle (1), houses said charging socket (2), wherein said compartment (11) can be selectively closed by means of a movable closing element (10). The interface (3) comprises a processing unit (30) adapted to process the data relating to the charging of said battery. The interface (3) comprises a sensor (31) adapted to determine the position of said closing element (10); said sensor is electronically connected to said processing unit (30).

Said sensor (31) adapted to determine the position of said closing element (10) is a proximity sensor.

Said proximity sensor (31) is of the optical, capacitive and/or ultrasonic type.

## Description

The present invention relates to an interface for charging sockets of vehicles, e.g. electric vehicles and/or hybrid vehicles, which can return to the user one or more pieces of information about the charging state of at least one battery comprised in the vehicle.

Said interface is essentially a human-machine interface (HMI), which is located outside the passenger compartment of the vehicle and provides the user with useful feedback, e.g. visual feedback, concerning the state of charge of the battery and/or the battery charging procedure.

Interfaces for vehicular charging sockets are known which are adapted to provide the user with visual feedback and which, in an idle condition, are covered by a door. When said door is opened, said interface is adapted to activate itself and start returning information to the user.

The solutions currently known in the art utilize Hall-effect sensors for determining whether said door is in a closed configuration, thus covering said charging socket as well as said interface, or in an open configuration, thus making the charging socket and the interface accessible to the user.

Although very reliable, since it can operate in extreme environmental conditions outside the vehicle as required in the automotive field, such sensors are difficult to implement because they require the use of at least one metal portion associated with said door. Moreover, this sensor type is difficult to calibrate, requiring a setup procedure that may take a long time and that must be repeated every time a component is modified.

Patent application DE102018209168A1 discloses a charging interface unit for a vehicle equipped with an electric energy accumulator. The charging interface unit comprises a charging interface designed to establish an electrically conductive plug-type connection with a charging interface of a charging cable for the purpose of generating electric energy for charging the energy accumulator during a charging process. The charging interface unit comprises an optical sensor. The interface unit is configured to acquire data from the optical sensor concerning the state of the door that covers the charging interface. The control unit can thus determine whether the door is in an open state or in a closed state based on the data supplied by the optical sensor. The interface unit further comprises a position sensor adapted to determine when a pin is within a wall of the structure.

Such a solution requires the presence of an optical sensor and a position sensor to determine whether the door is open or closed, thus increasing production costs and decreasing reliability, particularly because of the use of an optical sensor, which may mistakenly signal that the door is open when indicator or illumination lights are on in the interface compartment.

In the automotive field, the need has now emerged for finding low-cost solutions capable of operating outside the passenger compartment of the vehicle, while being simple to design and set up, particularly as concerns their calibration on each charging socket and/or door in use, so that the same solution can be used on different vehicle models without any additional investments being necessary.

In general, the present invention aims at solving these and other technical problems by providing an interface for charging sockets of vehicles which comprises at least one robust, reliable and easy-to-calibrate proximity sensor, so as to simplify the installation of the interface on charging sockets of vehicles.

One aspect of the present invention relates to an interface having the features set out in the appended claim 1.

A further aspect of the present invention relates to a charging socket having the features set out in the appended claim 6.

Yet another aspect of the present invention relates to a vehicle having the features set out in the appended claim 8.

Auxiliary features of the interface, socket, and vehicle are set out in respective dependent claims appended hereto.

The features and advantages of the interface, socket, and vehicle will become clear and apparent in light of the following description of several possible embodiments of the interface, socket, and vehicle, provided herein by way of non-limiting example, as well as from the annexed drawings, wherein:
- Figure 1 shows an axonometric view of one possible embodiment, provided by way of non-limiting example, of the interface according to the present invention;
- Figure 2 shows a schematic view of an interface according to the present invention associated with a vehicular charging socket, both of which are housed in a compartment that can be closed by means of a closing element, particularly a door;
- Figure 3 shows a schematic view of a portion of a vehicle comprising a charging socket to which a cable of a battery charger is connected.

With reference to the above-listed figures, reference numeral 3 designates as a whole the interface according to the present invention. Reference numeral 2 designates as a whole the charging socket. Lastly, reference numeral 1 identifies a vehicle comprising a charging socket and an interface according to the present invention.

Interface 3 according to the present invention is particularly suitable for being coupled to charging sockets 2 of vehicles 1.

Interface 3 according to the present invention is adapted to return to the user of a charging socket 2 information about the charging state of at least one battery comprised in vehicle 1.

More particularly, interface 3 according to the present invention is adapted to be housed in the same compartment 11 which, being positioned outside a passenger compartment of vehicle 1, houses said charging socket 2. Preferably, said interface 3 and said charging socket 2 are arranged side by side.

Said compartment 11, in which said charging socket 2 and said interface 3 are arranged, can be selectively closed by means of a movable closing element 10, e.g. a door.

More generally, said interface 3 comprises a processing unit 30. Said processing unit 30 is adapted to process the data relating to the charging of said battery, in particular to return to the user information about the charging state of at least one battery comprised in vehicle 1.

Said interface 3 further comprises at least one sensor 31. Said at least one sensor 31 is adapted to determine the position of said closing element 10; for example, it is adapted to determine the position of said closing element 10 relative to said compartment 11, e.g. to determine whether said closing element 10 is closed, thus preventing the user from accessing said compartment 11, and hence said charging socket 2, or open, thus allowing the user to gain access to said compartment 11, and hence to said charging socket 2.

Said sensor 31 is electronically connected to said processing unit 30. Said processing unit 30 is adapted to process the data coming from said sensor 31, for the purpose of determining, for example, whether said closing element 10 is open or closed.

Interface 3 according to the present invention comprises at least one sensor 31, which is a proximity sensor. Said proximity sensor 31 is of the optical, capacitive and/or ultrasonic type.

Such a solution solves all of the technical problems suffered by the above-mentioned magnetic sensors. In fact, sensors 31 are immune to environmental noise, e.g. electromagnetic fields. Moreover, the use of proximity sensors, whether optical, capacitive or ultrasonic ones, makes it easier to set up sensor 31 in interface 3, since it can be used with any type of closing element 10, thereby providing a reliable sensor less subject to malfunctions or errors. In addition, with the present solution it is sufficient to employ a single sensors for determining whether said closing element 10 is open or closed.

More generally, said interface 3 is a human-machine interface (HMI), which permits the user to interact with a machine, e.g. a system for charging the batteries of a vehicle 1 (not shown).

For simplicity's sake, term sensor 31 will be used in the following description to refer to a proximity sensor, regardless of the technology employed for implementing it.

In one possible embodiment of interface 3 according to the present invention, said sensor 31 is an optical sensor, preferably an infrared optical sensor. Such a solution is suitable for a wide range of applications, since the state (e.g. open or closed) of said closing element 10 can be detected independently of the material and/or shape of the latter, in addition to being less sensitive to disturbances, e.g. caused by other sources of light, in particular artificial light. Moreover, with such a solution said sensor 31 can be easily incorporated into a supporting structure 32 of interface 3. Furthermore, the optical sensor solution ensures a detection range of up to several tens of centimetres.

In one possible embodiment of interface 3 according to the present invention, sensor 31 is an optical photo-reflector, e.g. said sensor 31 is an infrared optical photo-reflector. The present embodiment permits measuring a distance, so that the distance can be parameterized to detect also intermediate positions of closing element 10 in addition to the fully closed or fully open state. By measuring the time of flight, the present solution makes the sensor more easily configurable according to specific requirements. In addition, the present embodiment is less susceptible to light in the visible spectrum, and is therefore more reliable than a traditional light sensor.

In some alternative embodiments (not shown), said interface 3 comprises two or more sensors 31, which are made by using two different technologies in order to obtain redundant data about the state of said closing element 10, which data are then processed by processing unit 30, so as to reduce any uncertainty and eliminate any errors in the determined state of said closing element 10.

Describing now in further detail the construction of one possible embodiment of interface 3 according to the present invention, said interface 3 comprises, as aforementioned, a supporting structure 32. Said supporting structure 32 extends along an axis, e.g. a vertical axis "Z" .

In the preferred embodiment, said sensor 31 is positioned in proximity to an upper end of said supporting structure 32, with reference to said vertical axis "Z". Such a solution permits positioning said sensor 31 in a peripheral part of supporting structure 32, so that most of the surface of said supporting structure 32 can be used for the interface function in order to return information and/or to allow the user to enter data and/or information.

More generally, the information about the charging state of at least one battery of vehicle 1 returned by interface 3 according to the present invention concerns, for example, the battery charge level, the charging state, e.g. whether the charging process is still in progress or has been completed; and/or the remaining charging time, etc.

More generally, said interface 3 according to the present invention may comprise illuminating elements 332. Said illuminating elements 332 may be adapted to be activated and emit light whenever said processing unit 30 determines, by means of said sensor 31, that closing element 10 has been opened, thus allowing the user to gain access to charging socket 2. Said illuminating elements 332 are driven by said processing unit 30, to which they are electronically connected. The present solution permits implementing in interface 3 additional feedback for the user, who, after having opened closing element or door 10, will see lights and/or an animation that will assist them in using charging socket 2, e.g. by facilitating the insertion of a plug into charging socket 2.

In a preferred embodiment, said illuminating elements 332 are, for example, light guides.

Interface 3 according to the present invention comprises also visual feedback devices 33 adapted to return to the user, at least partly, visual information about the charging state of at least one battery comprised in vehicle 1. Said visual feedback devices 33 consist of, for example, a plurality of LEDs, e.g. RGB LEDs, or a display.

Preferably, said illuminating elements 332 are comprised in said visual feedback devices 33, being a part thereof.

In one possible embodiment, said visual feedback devices 33 are LEDs arranged along an axis, e.g. a vertical axis "Z". Said LEDs are driven by said processing unit 30, so that they are activated proportionally, e.g. in number, to the battery charge level, being able to change their state over time according to the charge level reached by the battery.

In the embodiment wherein said visual feedback devices 33 consist of a display, the latter can display text and/or images and/or animations showing useful information, e.g. concerning the current charge level, the remaining time, etc. In addition to providing more information to the user, the graphic representation can in this case be modified and varied as needed.

The present embodiment considerably improves the functionality of interface 3 according to the present invention.

In a preferred embodiment of interface 3 according to the present invention, it comprises at least one button 34. Said button is a device adapted to allow the user to input information via interface 3. Such inputs are then suitably processed by said processing unit 30. For example, said button 34 is adapted to communicate that the user is ready to charge the vehicle or is ready to remove the plug from charging socket 2.

Said button 34 may be either a mechanical push-button, with mobile electric contacts, or a touch sensor, e.g. a capacitive key.

In the embodiment wherein button 34 consists of a capacitive key, the latter may be comprised in a visual feedback device 33, e.g. in a display.

More generally, said processing unit 30 is a microcontroller or a microprocessor comprised in interface 3, e.g. arranged inside supporting structure 32. Said processing unit 30 is adapted to communicate with the battery charging system of vehicle 1.

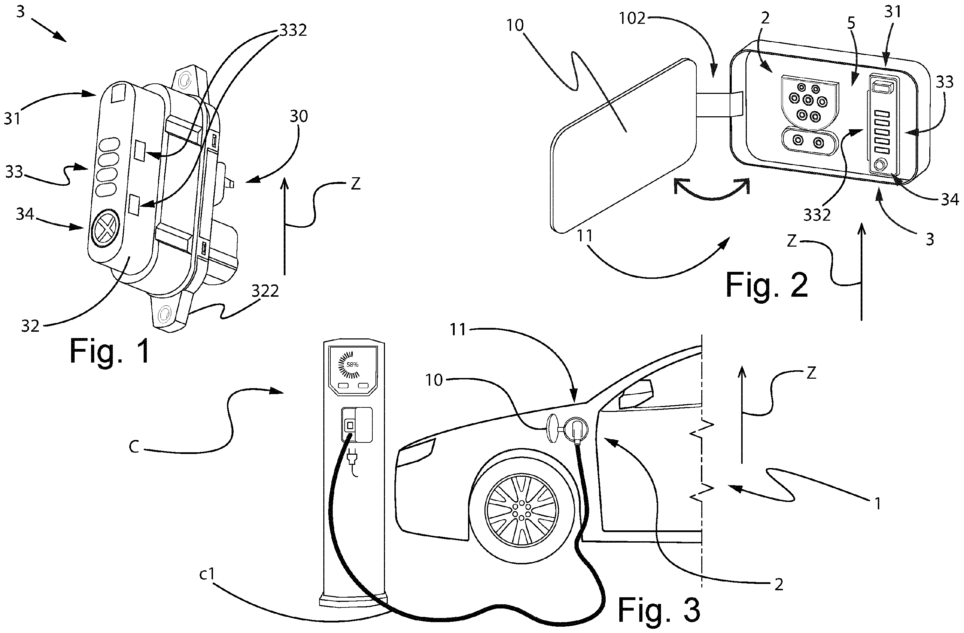

Figure 1 shows an axonometric view of one possible, but merely illustrative and non-limiting, embodiment of interface 3 according to the present invention. In this figure, one can see that the portion visible to the user is solely the flat portion whereon sensor 31 and visual feedback devices 33 are located. Said sensor 31 is positioned at the upper end of that part of interface 3 which remains visible to the user once interface 3 has been placed in the housing comprised in compartment 11 of vehicle 1. In the lower portion, e.g. at the end opposite said sensor 31, there is at least one button 34 that permits inputting an input signal that will be received by processing unit 30.

Said processing unit 30 is adapted to drive said visual feedback devices 33, which include illuminating elements 332, arranged in a central portion of interface 3.

Said interface 3 is so shaped that the supporting structure comprises connecting portions 322 adapted to be suitably fixed inside compartment 11, into the housing specially dedicated to said interface 3, through removable fastening means. Said interface 3 comprises electric and electronic connectors connecting interface 3 according to the present invention electrically and electronically to charging socket 2 and to vehicle 1.

Said interface 3 is thus particularly suitable for being associated with and/or comprised in a charging socket 2 for charging batteries of vehicles 1.

Said charging socket 2 is adapted to be arranged in a compartment 11 located outside a passenger compartment of vehicle 1. More particularly, said compartment 11 can be closed by means of a closing element 10, e.g. a door.

Said charging socket 2 is adapted to be connected to a battery charger "C" by means of a cable "c1" comprising a plug adapted to be inserted into said charging socket 2 for charging said batteries.

Said charging socket 2 is also electrically connected to a battery charging system of vehicle 1.

Said charging socket 2 further comprises a safety system 5. Said safety system 5 is adapted to ensure the correct execution of the process of charging a battery of vehicle 1.

Said charging socket 2 according to the present invention comprises an interface 3 according to the present invention.

Said charging socket 2 according to the present invention is configured in accordance with one of the following standards: Shuko; Type 1 Yazaki; Type 2 Mennekes; Type 3 Scame; CHAdeMO; CCS COMBO1; CCS COMBO2, etc.

The socket type will depend on the vehicle manufacturer and/or the market where vehicle 1 will be sold and used.

Figure 2 shows a schematic view of an interface 3 according to the present invention associated with a charging socket 2 for vehicles 1, wherein compartment 11 can be closed by means of a door 10.

In the illustrated embodiment, said compartment 11 has a rectangular shape and houses a charging socket 2, which is shown to be, merely by way of non-limiting example, a socket of the CCS COMB02 type. Beside said charging socket 2 there is an interface 3 according to the present invention.

Said charging socket 2 further comprises a safety system 5 adapted to suitably lock a plug into charging socket 2 during the battery charging procedure and to release said plug at the end of the charging procedure.

Said compartment 11 is adapted to be closed, thus preventing access to said charging socket 2, by means of a door 10. Said door 10 has a shape which is complementary to the shape of compartment 11.

Said door 10 is connected to vehicle 1 by connecting means 102, which allow said door 10 to make a rotational movement, e.g. to rotate about an axis parallel to said vertical axis "Z".

In the illustrated embodiment, said interface 3 comprises a sensor 31 adapted to detect the state of said door 10. Under said sensor 31 said visual feedback devices 33 are arranged. Under said visual feedback devices there is a button 34, which may be either a mechanical push-button or a capacitive key. Said illuminating elements 332, consisting of one or more light guides, are arranged laterally. Said interface 3 has a structure that extends substantially along said vertical axis "Z".

As aforementioned, interface 3 and/or said charging socket 2 according to the present invention are particularly suitable for being employed and/or comprised in a vehicle 1.

Said vehicle 1 comprises at least one electric motor, e.g. adapted to move vehicle 1, and at least one battery (not shown). Said at least one battery is adapted to be recharged and to supply power to said electric motor.

Vehicle 1 according to the present invention comprises a compartment 11 positioned outside a passenger compartment (not shown) of vehicle 1. In said compartment 11 at least one charging socket 2 is positioned, e.g. in a suitable housing, for charging said at least one battery.

Said compartment 11 can be selectively closed by means of a closing element 10, e.g. a door.

Vehicle 1 according to the present invention comprises at least one interface 3 according to the present invention. Said interface 3 is positioned in said compartment 11, e.g. in a suitable housing, preferably in proximity to said charging socket 2.

Interface 3 according to the present invention is adapted to interface with other control units of vehicle 1, e.g. through said processing unit 30, e.g. by implementing communication protocols commonly used in the automotive industry such as, for example, CAN or LIN.

In vehicle 1 according to the present invention comprising an interface 3 according to the present invention, said closing element 10 may be made of any material and may have any shape. In fact, the use of optical, capacitive and/or ultrasonic proximity sensors 31 makes it possible to produce said closing element 10 entirely from plastic, no longer requiring such closing element 10 to be made, at least partly, from metal or to be connectable to at least one metal element. Moreover, said closing element 10 may have any shape or size, without jeopardizing the proper operation of sensor 31, which will anyway be able to detect whether said closing element 10 is in a closed configuration, thus preventing a user from accessing said compartment 11, and hence said charging socket 2, or in an open configuration, thus allowing a user to gain access to said compartment 11, and hence to said charging socket 2.

In vehicle 1 according to the present invention, said closing element 10, in particular a door, may be connected to vehicle 1 by connecting means 102.

Said connecting means 102 are adapted to allow said closing element 10 to move by making one or more rotational, translational and/or rototranslational movements.

In one possible embodiment, said connecting means 102 allow said closing element 10 to make a rotational movement about an axis parallel to said vertical axis "Z", preferably while remaining constrained to said vehicle 1.

In another possible embodiment, said connecting means 102 allow said closing element 10 to make at least one translational movement, e.g. to slide along an axis perpendicular to said vertical axis "Z". Alternatively, it may be allowed to make two translational movements along two axes perpendicular to each other, which are in turn perpendicular to said vertical axis "Z".

In another embodiment, said connecting means 102 allow said closing element 10 to make a hybrid movement, including both an at least partly rotational movement and an at least partly translational movement, e.g. a rototranslational movement.

In one possible, but merely illustrative and non-limiting, embodiment, said connecting means 102 comprise an actuator device, e.g. an electric motor, a servo motor and/or a solenoid, capable of controllably moving said closing element 10 between the two different operating configurations, e.g. from the closed one to the open one, and vice versa.

Said closing element 10 is preferably a door, or, in an "extreme" embodiment, said closing element 10 may be completely removable from vehicle 1, particularly from compartment 11 it is associated with. In this latter embodiment, said closing element 10 is a cover or a cap, which is fitted, e.g. by shape coupling, to compartment 11 and can be fully removed and then associated again with compartment 11.

Figure 3 shows a schematic view of a portion of a vehicle 1 comprising a charging socket 2, housed in a compartment 11, to which a cable "c1" of a battery charger "C" is connected.

In this figure, one can see a door 10 in an open configuration and a plug at the end of a cable "c1" inserted into said charging socket 2.

It is apparent from this figure that said compartment 11 is external to the passenger compartment of vehicle 1. In the illustrated embodiment, it is arranged in a front lateral portion of vehicle 1. The position of compartment 11 may however be different, e.g. in a front portion of the vehicle, or in a rear portion, e.g. near the point where the fuel tank filler neck is, or was, located.

The present invention makes it possible to easily determine the state of closing element 10, thus reducing the production and implementations costs.

The present invention is applicable to any conformation and/or material used for said closing element 10, thus being easily applicable to charging sockets 2 that may even widely differ from one another, without requiring any further modifications and/or difficult calibration operations. In fact, the present invention permits a much simpler, quicker and more reliable calibration of sensor 31.

Furthermore, said closing element 10 does not necessarily have to comprise any metal parts, resulting in lower costs incurred for designing and manufacturing charging socket 2 and vehicle 1, while also decreasing the weight of said closing element 10, e.g. a door.

The present solution can be easily applied to any type of connecting means 102 used for moving closing element 10, e.g. a door, since said sensor 31 can detect both rotational and translational movements of closing element 10.

Any alternative embodiments of interface 3 which have not been described in detail herein, but which will be apparent to a person skilled in the art in light of the contents of the present patent application, shall be considered to fall within the protection scope of the present invention.

**REFERENCE NUMERALS**

| | |
|---|---|
| Vehicle | 1 |
| Closing element | 10 |
| Connecting means | 102 |
| Compartment | 11 |
| Charging socket | 2 |
| Interface | 3 |
| Processing unit | 30 |
| Sensor | 31 |
| Supporting structure | 32 |
| Connecting portion | 322 |
| Visual feedback devices | 33 |
| Illuminating elements | 332 |
| Button | 34 |
| Safety system | 5 |
| Battery charger | "C" |
| Cable | "c1" |
| Vertical axis | "Z" |

## Claims

1. Interface (3) for charging sockets (2) of vehicles (1), adapted to return to the user of a charging socket (2) information about the charging state of at least one battery comprised in the vehicle (1);
said interface (3) is adapted to be housed in the same compartment (11) which, being positioned outside a passenger compartment of the vehicle (1), houses said charging socket (2), wherein said compartment (11) can be selectively closed by means of a movable closing element (10);
said interface (3) comprising a processing unit (30) adapted to process the data relating to the charging of said battery; said interface (3) comprising at least one sensor (31) adapted to determine the position of said closing element (10); said sensor is electronically connected to said processing unit (30);
said interface (3) being **characterized in that** said at least one sensor (31) adapted to determine the position of said closing element (10) is a proximity sensor;
said proximity sensor (31) is of the optical, capacitive and/or ultrasonic type.

2. Interface (3) according to claim 1, wherein said sensor (31) is an infrared optical sensor.

3. Interface (3) according to claim 1 or 2, wherein the sensor (31) is an optical photo-reflector.

4. Interface (3) according to claim 1, wherein said interface (3) comprises a supporting structure (32) extending along a vertical axis (Z); said sensor (31) being arranged in proximity to an upper end of said supporting structure (32).

5. Interface (3) according to claim 1, comprising illuminating elements (332), said illuminating elements (332) being adapted to be activated and emit light whenever said processing unit (30) determines, by means of said sensor (31), that the closing element (10) has been opened, thus allowing the user to gain access to the charging socket (2).

6. Charging socket (2) for charging batteries of vehicles (1), adapted to be arranged in a compartment (11) positioned outside a passenger compartment of the vehicle (1), wherein said compartment (11) can be closed by means of a closing element (10);
said charging socket (2) is adapted to be connected to a battery charger (C) by means of a cable (c1);
said charging socket (2) being electrically connected to a battery charging system of the vehicle (1);
said charging socket (2) comprising a safety system (5) ensuring the correct execution of a process of charging a battery of the vehicle (1);
said charging socket (2) comprising an interface (3) according to one of the preceding claims.

7. Charging socket (2) according to claim 6, wherein said socket is configured in accordance with one of the following standards:
- Shuko;
- Type 1 Yazaki;
- Type 2 Mennekes;
- Type 3 Scame;
- CHAdeMO;
- CCS COMBO1;
- CCS COMBO2.

8. Vehicle (1) comprising an electric motor and at least one battery adapted to be recharged and to supply power to said electric motor;
said vehicle (1) comprising a compartment (11) positioned outside a passenger compartment of the vehicle (1), in which a charging socket (2) is housed for charging said at least one battery; said compartment (11) being selectively closable by means of a closing element (10);
said vehicle (1) being **characterized in that** it comprises an interface (3) according to claim 1, positioned in said compartment (11).

9. Vehicle (1) according to claim 8, wherein said closing element (10) may have any shape and may be made of any material.

10. Vehicle (1) according to claim 8 or 9, wherein said closing element (10) is a door connected to the vehicle (1) by connecting means (102);
said connecting means (102) being adapted to allow said door (10) to move by making one or more rotational, translational and/or rototranslational movements.
